# EUROPÄISCHE PATENTSCHRIFT

(11) **EP 2 132 020 B1**
(45) Veröffentlichungstag und Bekanntmachung des Hinweises auf die Patenterteilung: **02.02.2011**
(21) Anmeldenummer: 08718127.7
(22) Anmeldetag: 20.03.2008
(51) Int. Cl.: B29C 47/90, B29C 47/06

(54) **VORRICHTUNG ZUR HERSTELLUNG VON MEHRSCHICHTROHREN**
DEVICE FOR THE PRODUCTION OF MULTILAYER TUBES
DISPOSITIF DE PRODUCTION DE TUBES MULTICOUCHE

(30) Priorität: 29.03.2007 DE 102007015065
(43) Veröffentlichungstag der Anmeldung: 16.12.2009
(73) Patentinhaber: KraussMaffei Technologies GmbH, 80997 München (DE)
(72) Erfinder: GOSMANN, Gerd, 85276 Pfaffenhofen (DE); NEUBAUER, Achim, 85256 Vierkirchen (DE)
(74) Vertreter: Zollner, Richard
(86) Internationale Anmeldenummer: PCT/EP2008/053419
(87) Internationale Veröffentlichungsnummer: WO 2008/119684

(56) Entgegenhaltungen:
- EP-A- 1 627 724
- DE-A1- 4 139 649
- DE-A1- 19 843 340
- US-A- 5 630 982
- US-A- 6 053 214
- DATABASE WPI Week 198022 Derwent Publications Ltd., London, GB; AN 1980-38923C XP002483095 & JP 55 051538 A (SEKISUI CHEM IND CO LTD) 15. April 1980 (1980-04-15)

## Beschreibung

Die Erfindung betrifft eine Vorrichtung zur Herstellung von Mehrschichtrohren, insbesondere Schaumkernrohren mit einer Extruderanordnung, wobei die Extruderanordnung mindestens zwei Extrudern zur Erzeugung von Schmelze umfasst, mit mindestens einem Rohrkopf zur Formung der Schmelze und mit mindestens einem Kalibrierkorb zur Einstellung der Dimension des Durchmessers des Mehrschichtrohrs und zur Verfestigung der Formgebung des Mehrschichtrohrs sowie mindestens einem Abzug zum Transport des erzeugten Mehrschichtrohrs.

Vorrichtungen zur Herstellung von Schaumschichtrohren, insbesondere von Schaumkernrohren sind aus der Praxis seit langem bekannt. Bei den bekannten Vorrichtungen wird mittels zwei oder mehrerer Extruder Schmelze erzeugt. In mindestens einem der Extruder findet eine Verschäumung der Schmelze mittels chemischem oder physikalischem Schäumen statt. Bei diesen Vorrichtungen ist problematisch, dass Mehrschichtrohre mit unterschiedlichen Außendurchmessern und u. U. unterschiedlichen Wanddicken es erfordern, die Vorrichtung umzurüsten. Hierzu werden in der Regel der Rohrkopf sowie der Kalibrierkorb ausgetauscht. Im Stand der Technik ist es dabei erforderlich, dass entsprechend dem Außendurchmesser des Rohres und der gewünschten, üblicherweise in Abhängigkeit des Außendurchmessers genormten Wanddicke des Rohres entsprechende Werkzeuge ausgewechselt werden müssen. Dies bedingt ein Stillsetzen der Maschine, einen hohen Arbeitsaufwand für das Auswechseln und einen Verlust an Kunststoffmaterial, bis das neue Mehrschichtrohr wieder mit einer hinreichenden Qualität produziert werden kann.

Aus der EP 1 115 550 B1 ist eine Vorrichtung zur Herstellung von Kunststoffrohren bekannt. Diese Vorrichtung umfasst einen Extruder, einen sich in Produktionsrichtung anschließenden Rohrkopf und eine Kalibrierstation, die Kalibrierwerkzeuge aufweist. Diese Kalibrierwerkzeuge liegen an der Außenwandung des Rohres zur Formgebung an. Als Kalibrierwerkzeug ist eine Vielzahl von Lamellen vorgesehen, die im Durchmesser verstellbar sind.

Aus DE 41 39 649 A1 sind ein Verfahren und eine Vorrichtung zur Herstellung eines dickwandigen Kunststoffrohres mit einer vertikalen, während des Betriebs im Durchmesser nicht veränderbaren Scheibenlcatibrierung bekannt. Ebenfalls darin aufgeführt sind EP 03 58 178 A1 sowie DE 31 02 350 A1, welche jeweils Ausgestaltungen von mehrschichtigen Kunststoffrohren offenbaren.

EP 1 627 724 A2 offenbart ein Verfahren und eine Vorrichtung zur Herstellung von Kunststoffrohren mit einer zum Dimensionswechsel im laufenden Betrieb im Durchmesser verstellbaren Kalibrierhülse, wobei u.a. die Abzugsgeschwindigkeit des extrudierten Rohres in der Extrusionslinie variiert wird.

In US 5 630 982 wiederum sind ein Verfahren und eine Vorrichtung zum Extrudieren thermoplastischer Rohre aufgeführt. Dabei wird, um die Exzentrizität des Rohres zu verringern, in Abhängigkeit von der ermittelten Wanddicke der Vakuumkalibrierkorb bewegt.

Der vorliegenden Erfindung liegt die Aufgabe zugrunde, eine Vorrichtung zur Herstellung von Mehrschichtrohren der eingangs genannten Art anzugeben, mit der eine einfache Verarbeitung bei einfacher Konstruktion möglich ist.

Erfindungsgemäß wird die voranstehende Aufgabe durch eine Vorrichtung zur Herstellung von Mehrschichtrohren mit den Merkmalen des Patentanspruchs 1 gelöst. Danach ist die in Rede stehende Vorrichtung zur Herstellung von Mehrschichtrohren derart ausgestaltet und weitergebildet, dass der Kalibrierlcorb im Durchmesser des hindurchtretenden Mehrschichtrohres verstellbar ist, so dass die Mehrschichtrohre beim laufenden Betrieb in ihrer Dimension des Durchmessers veränderbar sind, und dass der Abstand zwischen Rohrkopf und Kalibrierkorb in Abhängigkeit vom Durchmesser des Mehrschichtrohrs veränderlich einstellbar ist.

Varteilhafte weiterbildungen der Erfindung sind in den Untevauspnïchen effenbart.

Besonders die Produktion von Mehrschichtrohren als Schaumkernrohren ist problematisch, da diese besonders instabil sind. Ein zu starkes Vakuum führt zum Reißen der Außenwandung und damit zum Auslaufen des Rohres. Ein zu schwaches Vakuum führt zu einem Ablösen des Schmelzeschlauches, so dass das Rohr in sich zusammenfällt. Entsprechendes gilt auch für die Produktion von anderen Mehrschichtrohren. Bislang ist man davon ausgegangen, dass wegen dieser Schwierigkeiten eine Durchmesserveränderung bei laufender Produktion bei Mehrschichtrohren nicht möglich ist. In erfindungsgemäßer Weise ist daher erkannt worden, dass man in Abkehr zu der bisherigen Annahme den bekannten Kalibrierkorb zur Dimensionsveränderung bei laufendem Betrieb verwenden kann. Eine einfache Verarbeitung bei einfacher Konstruktion ist somit ermöglicht, wodurch die Vorteile der Produktion von Rohren mit unterschiedlichen Dimensionen auch auf Mehrschichtrohre, insbesondere Schaumkernrohre, übertragbar sind.

In besonders vorteilhafter Weise könnte mindestens ein Extruder eine Einrichtung zum Einbringen von insbesondere chemischen Treibmitteln in die Schmelze aufweisen. Die Einrichtung könnte eine aus dem Stand der Technik bekannte Einrichtung zum Einbringen von Treibmittel in die Schmelze sein. Dadurch wäre ein besonders gutes Schaumbild der Schmelze zu erreichen, insbesondere im Hinblick auf die Zellengröße sowie deren Verteilung. Hierbei ist der Einsatz von jedwedem chemischen Treibmittel möglich.

Im Hinblick auf eine besonders einfache Ausgestaltung könnte die Dimensionsveränderung des Mehrschichtrohres durch eine Veränderung des Durchmessers des Kalibrierkorbs und/oder durch die Veränderung der Geschwindigkeit des Abzugs erfolaen.

Durch die Veränderung des Kalibrierkorbs wird der Durchmesser des Mehrschichtrohrs bestimmt. Durch eine Anpassung des im Kalibrierkorb angelegte Vakuums wird die Veränderung des Rohrdurchmessers erleichtert. Die Anpassung des Vakuums könnte derart erfolgen, dass ein Reißen der äußeren Hülle des Mehrschichtrohres und ein Ablösen des Rohres vom Kalibrierkorb vermieden wird. Die Anpassung könnte durch eine automatische Regelung, eine Steuerung oder manuelle Einstellung erfolgen. Eine automatische Regelung würde es ermöglichen, die Vorrichtung vollautomatisch fahren zu können. Die Veränderung der Geschwindigkeit des Abzuges ermöglicht es, die Dicke des Rohres einzustellen. Ferner kann so die Zellgröße im geschäumten Werkstoff gesteuert werden.

Zur Erhöhung der Variabilität des Durchmessers des Mehrschichtrohres könnte zwischen dem Rohrkopf und dem Kalibrierkorb eine Vakuumsaugglocke vorgesehen sein. Mittels dieser Vakuumsaugglocke würde die aus dem Rohrkopf austretende Schmelze aufgeweitet werden, wodurch ein größerer Dimensionsverstellungsbereich ermöglicht würde. In Kombination mit einer niedrigen Schmelzeviskosität würden sich nur leichte Veränderung eines Saugglockenvakuums direkt auswirken. Bei einer leichten Vakuumreduzierung käme es auf der anderen Seite sehr schnell zum Ablösen des Schmelzestrangs von der Kalibrierung. Ein geringfügiges Überziehen des Vakuums würde auf der anderen Seite zum Reißen der äußeren Hülle des Mehrschichtrohres und damit zu einem Auslaufen des Mehrschichtrohres führen. Eine direkte Regelung der Vakuumsaugglocke wäre daher sehr vorteilhaft. Diese Regelung könnte ebenfalls automatisiert ausgestaltet sein.

Im Hinblick auf eine besonders einfache Konstruktion könnte der Rohrkopf einen konstanten Düsenspalt aufweisen. Je nach Anzahl der Schichten würde der Rohrkopf mit Schmelze aus zwei oder mehr unterschiedlichen Extruder versorgt werden. Im einfachsten Fall würde ein solches Mehrschichtrohr aus einer inneren Schicht aus kompaktem Material eine Mittelschicht aus geschäumtem Material und aus einer Außenschicht aus wiederum kompaktem Material bestehen.

Im Rahmen einer besonders guten Variabilität der Mehrschichtrohre könnte der Rohrkopf allerdings auch einen variablen Düsenspalt aufweisen. Durch die Variabilität des Düsenspaltes könnte dann zusätzlich oder alternativ zu der Abzugsgeschwindigkeit die Wanddicke des Mehrschichtrohres geregelt werden.

Hinsichtlich der veränderlichen Ausgestaltung des Abstandes zwischen Rohrkopf und Kalibrierkorb wurde folgendes festgestellt: Entgegen der Einstellstrategie bei einem Kompaktrohr hat sich herausgestellt, dass es bei einem Schaumkernrohr vorteilhaft ist, den Abstand zwischen Kalibrierung und Rohrkopf mit abnehmendem Rohrdurchmesser zu vergrößern. Erfindungsgemäß ist nämlich erkannt worden, dass die Schaumschmelze nach Verlassen des Rohrkopfes eine gewisse Zeit zum Expandieren benötigt. Bei einer höheren Abzugsgeschwindigkeit bei kleineren Rohrdurchmessern, könnte dieser Tatsache dadurch Rechnung getragen werden, dass ein größerer Abstand zwischen Düse und Kalibrierung eingestellt werden kann. Bei größeren Durchmessern mit ihren zugehörigen Wandstärken könnte dagegen ein kleiner Abstand zwischen Düse und Kalibrierkorb gewählt werden. Insgesamt ist es also vorteilhaft mit abnehmendem Rohrdurchmesser den Abstand zwischen Rohrkopf und Kalibrierkorb zu vergrößern.

Hinsichtlich einer besonders einfachen Produktion eines PVC-Schaumkernrohres könnte die Extruderanordnung einen Hauptextruder, beispielsweise zur Erzeugung von PVC-Schmelze, und einen Coextruder, beispielsweise zur Erzeugung von PVC-Schmelze, umfassen. Die beiden Extruder könnten hierbei beispielsweise als Doppelschneckenextruder ausgestaltet sein, wobei der Hauptextruder im einfachsten Fall den geschäumten Kern des Rohres und der Coextruder dann die kompakte Innen- und Außenschicht des Mehrkemrohres produzieren könnte.

In besonders vorteilhafter Weise könnte das Masseverhältnis zwischen PVC-Schaum 60 Gewichts-% und PVC 40 Gewichts-% entsprechen. Das Masseverhältnis könnte jedoch je nach Anwendungsgebiet auch PVC-Schaum 70 Gewichts-% und PVC 30 Gewichts-% oder PVC-Schaum 50 Gewichts-% und PVC 50 Gewichts-% betragen. In weiter vorteilhafter Weise könnte die Dimensionsveränderung des Mehrschichtrohres im Bereich von 90 mm bis 140 mm und 110 mm bis 160 mm liegen. Ferner könnte ein Feedblock-System vorgesehen sein.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels einer erfindungsgemäßen Vorrichtung zur Herstellung von Mehrschichtrohren anhand der Zeichnung zu verweisen. In Verbindung mit der Erläuterung des bevorzugten Ausführungsbeispiels der erfindungsgemäßen Vorrichtung zur Herstellung von Mehrschichtrohren anhand der Zeichnung werden auch im allgemeinen bevorzugte Ausgestaltungen und Weiterbildungen der Lehre erläutert. In der Zeichnung zeigt
- Fig. 1: in einer schematischen Darstellung eines Ausführungsbeispiel einer erfin- dungsgemäßen Vorrichtung zur Herstellung von Mehrschichtrohren,
- Fig. 2: in einer schematischen Darstellung einen Querschnitt eines mit der erfin- dungsgemäßen Vorrichtung der Fig. 1 produzierten Mehrschichtrohres.

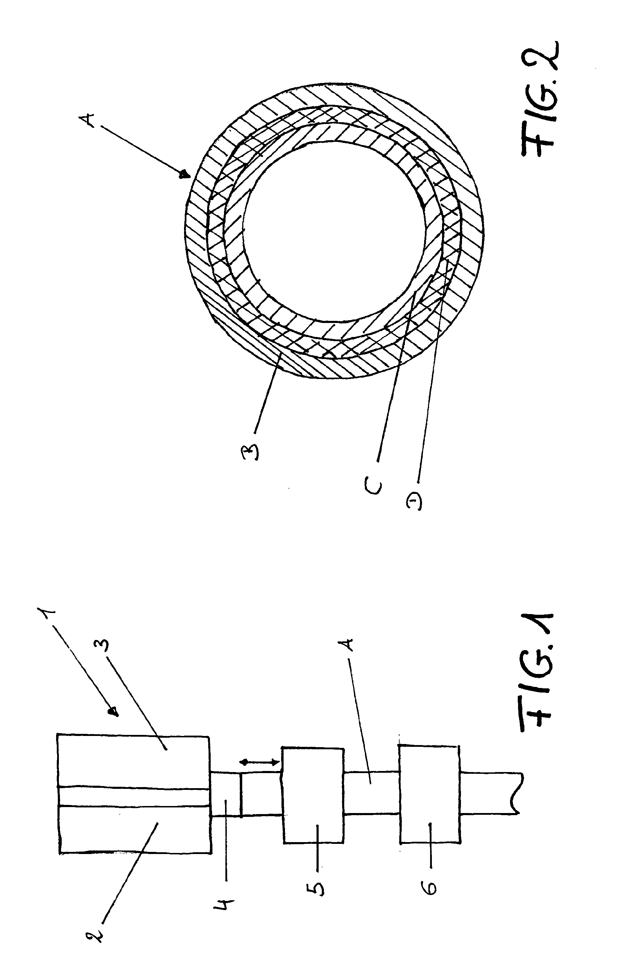

In Fig. 1 ist eine Vorrichtung zur Herstellung von Mehrschichtrohren, nämlich PVC-Schaumkernrohren, mit einer Extruderanordnung 1 gezeigt. Die Extruderanordnung besteht aus zwei Extrudern 2, 3, die zur Erzeugung von Schmelze dienen. Mittels eines Rohrkopfes 4 erfolgt eine Verteilung der aus den Extrudern 2, 3 erzeugten Schmelze sowie eine Formgebung dieser in Rohrform. Des weiteren ist ein Kalibrierkorb 5 vorgesehen, der zur Verfestigung der Formgebung dient. Zum Transport des erzeugten Mehrschichtrohres ist ferner ein Abzug 6 gezeigt. Erfindungsgemäß sind die Mehrschichtrohre A bei laufendem Betrieb in ihrer Dimension veränderbar.

Beide Extruder sind als Doppelschneckenextruder ausgeführt, wobei der Hauptextruder 2 eine PVC-Schmelze erzeugt und der Coextruder 3 zur Erzeugung der unverschäumten PVC-Schmelze dient. Der Rohrkopf 4 weist einen konstanten Düsenspalt auf. Die Änderung des Durchmessers des Mehrschichtrohrs A und die Einstellung der Wanddicke erfolgt über eine Veränderung des Durchmessers des Kalibrierkorbs 5 sowie durch die Veränderung der Geschwindigkeit des Abzugs 6. Des weiteren wird die maximal einstellbare Wanddicke über den Abstand zwischen der Düse des Rohrkopfes 4 und des Kalibrierkorbs 5 erzielt.

Fig. 2. zeigt ein Mehrschichtrohr A mit drei Schichten. Die Außen- B sowie die Innenschicht C bestehen aus kompakten PVC, wobei die Mittelschicht D aus geschäumten PVC besteht.

Hinsichtlich weiterer Details wird zur Vermeidung von Wiederholungen auf die allgemeine Beschreibung verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiels einschränkt.

### Bezugszeichenliste

- A: Mehrschichtrohr
- B: Außenschicht
- C: Innenschicht
- D: Mittelschicht
- 1: Extruderanordnung
- 2: Hauptextruder
- 3: Coextruder
- 4: Rohrkopf
- 5: Kalibrierkorb
- 6: Abzug

## Patentansprüche

1. Vorrichtung zur Herstellung von Mehrschichtrohren (A), insbesondere Schaumkernrohren, mit einer Extruderanordnung (1), wobei die Extruderanordnung (1) mindestens zwei Extruder (2, 3) zur Erzeugung von Schmelze umfasst, mit mindestens einem Rohrkopf (4) zur Formung der Schmelze und mit mindestens einem Kalibrierkorb (5) zur Einstellung der Dimension des Durchmessers des Mehrschichtrohrs und zur Verfestigung der Formgebung des Mehrschichtrohrs sowie mindestens einem Abzug (6) zum Transport des erzeugten Mehrschichtrohrs (1), **dadurch gekennzeichnet dass** der Kalibrierkorb (5) im Durchmesser des hindurchtretenden Mehrschichtrohrs verstellbar ist, so dass die Mehrschichtrohre beim laufenden Betrieb in ihrer Dimension des Durchmessers veränderbar sind, und dass der Abstand zwischen Rohrkopf und Kalibrierkorb in Abhängigkeit vom Durchmesser des Mehrschichtrohrs veränderlich einstellbar ist.

2. Vorrichtung nach Anspruch 1, **dadurch gekennzeichnet, dass** mindestens ein Extruder (2) eine Einrichtung zum Einbringen von insbesondere chemischem Treibmittel in die Schmelze aufweist.

3. Vorrichtung nach Anspruch 1 oder 2, **dadurch gekennzeichnet, dass** die Dimensionsveränderung des Mehrschichtrohrs (A) durch eine Veränderung des Durchmessers des Kalibrierkorbs (5) und/oder durch die Veränderung der Geschwindigkeit des Abzugs (6) erfolgt.

4. Vorrichtung nach einem der Ansprüche 1 bis 3, **dadurch gekennzeichnet, dass** zwischen dem Rohrkopf (4) und dem Kalibrierkorb (5) eine Vakuumsaugglocke vorgesehen ist.

5. Vorrichtung nach einem der Ansprüche 1 bis 4, **dadurch gekennzeichnet, dass** der Rohrkopf (4) einen konstanten Düsenspalt aufweist.

6. Vorrichtung nach einem der Ansprüche 1 bis 4, **dadurch gekennzeichnet, dass** der Rohrkopf (4) einen variablen Düsenspalt aufweist.

7. Vorrichtung nach einem der Ansprüche 1 bis 6, **dadurch gekennzeichnet, dass** die Extruderanordnung einen Hauptextruder (2), beispielsweise zur Erzeugung von PVC-Schmelze, und einen Coextruder (3), beispielsweise zur Erzeugung von PVC-Schmelze, umfasst.

8. Vorrichtung nach einem der Ansprüche 1 bis 7, **dadurch gekennzeichnet, dass** das Masseverhältnis zwischen dem mikronisierten PVC-Schaum 60 Gewichts-% und PVC 40 Gewichts-% entspricht.

9. Vorrichtung nach einem der Ansprüche 1 bis 8, **dadurch gekennzeichnet, dass** die Dimensionsveränderung des Mehrschichtrohrs (A) im Bereich von 90 mm bis 140 mm und 110 mm bis 160 mm liegt.

10. Vorrichtung nach einem der Ansprüche 1 bis 9, **dadurch gekennzeichnet, dass** ein Feedblock-System vorgesehen ist.

## Claims

1. Device for the production of multi-layer tubes (A), in particular foam core tubes, with an extruder arrangement (1), wherein the extruder arrangement (1) comprises at least two extruders (2, 3) for the production of melt, with at least one tube head (4) for forming the melt and with at least one calibration basket (5) for adjusting the dimension of the diameter of the multi-layer tube and for consolidating the shaping of the multi-layer tube and with at least one outlet (6) for the transportation of the produced multi-layer tube (1), **characterized in that** the calibration basket (5) is adjustable in the diameter of the multi-layer tube passing through, so that the multi-layer tubes are able to be changed in their dimension of the diameter during operation, and **in that** the distance between tube head and calibration basket is changeably adjustable as a function of the diameter of the multi-layer tube.

2. Device according to Claim 1, **characterized in that** at least one extruder (2) has an arrangement for the introduction of in particular chemical propellant into the melt.

3. Device according to Claim 1 or 2, **characterized in that** the change in dimension of the multi-layer tube (A) takes place by a change to the diameter of the calibration basket (5) and/or by the change to the speed of the outlet (6).

4. Device according to one of Claims 1 to 3, **characterized in that** a vacuum suction bell is provided between the tube head (4) and the calibration basket (5).

5. Device according to one of Claims 1 to 4, **characterized in that** the tube head (4) has a constant nozzle gap.

6. Device according to one of Claims 1 to 4, **characterized in that** the tube head (4) has a variable nozzle gap.

7. Device according to one of Claims 1 to 6, **characterized in that** the extruder arrangement comprises a main extruder (2), for example for the production of PVC melt, and a coextruder (3), for example for the production of PVC melt.

8. Device according to one of Claims 1 to 7, **characterized in that** the mass ratio corresponds between the micronized PVC foam 60 % by weight and PVC 40 % by weight.

9. Device according to one of Claims 1 to 8, **characterized in that** the change in dimension of the multi-layer tube (A) lies in the range of 90 mm to 140 mm and 110 mm to 160 mm.

10. Device according to one of Claims 1 to 9, **characterized in that** a feedblock system is provided.

## Revendications

1. Dispositif de production de tubes multicouches (A), en particulier de tubes à coeur expansé, comprenant un agencement d'extrudeuses (1), sachant que l'agencement d'extrudeuses (1) comprend au moins deux extrudeuses (2, 3) pour produire de la fonte, comprenant au moins une tête de tube (4) pour former la fonte et comprenant au moins une cage de calibrage (5) pour régler la dimension du diamètre du tube multicouches et pour renforcer la mise en forme du tube multicouches, ainsi qu'au moins un enlèvement (6) pour transporter le tube multicouches (1) produit, **caractérisé en ce que** la cage de calibrage (5) est réglable dans le diamètre du tube multicouches entrant dedans, de façon à ce que la dimension du diamètre des tubes multicouches soit modifiable en fonctionnement continu et que l'écart entre la tête de couche et la cage de calibrage soit réglable de manière modifiable en fonction du diamètre du tube multicouches.

2. Dispositif selon la revendication 1, **caractérisé en ce qu'**au moins une extrudeuse (2) présente un dispositif pour faire pénétrer en particulier des agents moussants dans la fonte.

3. Dispositif selon la revendication 1 ou 2, **caractérisé en ce que** la modification de dimension du tube multicouches (A) s'effectue par une modification du diamètre de la cage de calibrage (5) et/ou par une modification de la vitesse de l'enlèvement (6).

4. Dispositif selon l'une des revendications 1 à 3, **caractérisé en ce qu'**une cloche d'aspiration à vide est prévue entre la tête de tube (4) et la cage de calibrage (5).

5. Dispositif selon l'une des revendications 1 à 4, **caractérisé en ce que** la tête de tube (4) présente une fente de filière constante.

6. Dispositif selon l'une des revendications 1 à 4, **caractérisé en ce que** la tête de tube (4) présente une fente de filière variable.

7. Dispositif selon l'une des revendications 1 à 6, **caractérisé en ce que** l'agencement d'extrudeuses comprend une extrudeuse principale (2), par exemple pour produire de la fonte de PVC, et une co-extrudeuse (3), par exemple pour produire de la fonte de PVC.

8. Dispositif selon l'une des revendications 1 à 7, **caractérisé en ce que** le rapport massique est de 60% en poids pour la mousse de PVC micronisée et de 40% en poids pour le PVC.

9. Dispositif selon l'une des revendications 1 à 8, **caractérisé en ce que** la modification de dimension du tube multicouches (A) est dans la plage de 90 mm à 140 mm et 110 mm à 160 mm.

10. Dispositif selon l'une des revendications 1 à 9, **caractérisé en ce qu'**un système Feedblock est prévu.
